# EUROPÄISCHE PATENTANMELDUNG

(11) **EP 0 997 357 A2**
(43) Veröffentlichungstag der Anmeldung: **03.05.2000**
(21) Anmeldenummer: 99112249.0
(22) Anmeldetag: 25.06.1999
(51) Int. Cl.: B60R 22/195

(54) **Gurtstraffer**

(30) Priorität: 27.10.1998 DE 29819095 U
(71) Anmelder: Dittrich, Klaus-Jürgen, 28832 Achim (DE)
(72) Erfinder: Dittrich, Klaus-Jürgen, 28832 Achim (DE)

(57) **Zusammenfassung**

Es wird ein Gurtstraffer für ein Fahrzeuginsassen-Rückhaltesystem angegeben, mit einem Zylinder (10), einem in dem Zylinder (10) verschiebbaren Kolben (1), mindestens einem Zugseil (6), welches von dem Kolben (1) mit geringem Spiel durch eine vordere Zylinderstirnwand (14) zu einem Gurtanlenkglied (2) verläuft, einem Gasgenerator, bei dessen Zündung ein Treibmittel in einen Druckraum (26) zwischen dem Kolben (1) und der vorderen Zylinderstirnwand (14) einströmt und den Kolben (1) von einer Normalposition in eine Straffhalteposition verschiebt, und einer Rücklaufsperre (30, 34), welche den Kolben (1) in der Straffhalteposition hält. Der Gurtstraffer ist dadurch gekennzeichnet, daß die Rücklaufsperre (30, 34) am Kolben (1) mindestens ein radial auswärts spreizendes Spreizelement (30) und am Zylinder (10) mindestens ein Rastelement (34) aufweist, und daß das Spreizelement (30) das/die Rastelemente (34) bei Erreichen der Straffhalteposition fest hintergreift.

## Beschreibung

Die Erfindung betrifft einen Gurtstraffer für ein Fahrzeuginsassen-Rückhaltesystem mit einem Zylinder, einem in dem Zylinder verschiebbaren Kolben, mindestens einem Zugseil, welches von dem Kolben mit geringem Spiel durch eine vordere Zylinderstirnwand zu einem Gurtanlenkglied verläuft, einem Gasgenerator, bei dessen Zündung ein Treibmittel in einen Druckraum zwischen dem Kolben und der vorderen Zylinderstirnwand einströmt und den Kolben von einer Normalposition in eine Straffhalteposition verschiebt, und einer Rücklaufsperre welche den Kolben in der Straffhalteposition hält.

Ein derartiger Gurtstraffer ist aus der G 85 02 536.4 bekannt, bei dem das Zugseil durch eine zentrale Bohrung des Kolbens hindurchgeführt ist und auf der dem Druckraum abgewandten Seite des Kolbens mittels einer Seilklemme gehalten ist. Die Rücklaufsperre dieses bekannten Gurtstraffers besteht aus einer am Außenumfang des Kolbens vorgesehenen ringförmigen Ausnehmung, die sich in Richtung auf das hintere Ende des Zylinders konisch verjüngt, sowie einem in dieser Ausnehmung verschiebbaren Sperring mit einem keilförmigen Querschnitt, der sich in der Straffhalteposition des Kolbens in der Ausnehmung verkeilt. Am Außenumfang des Kolbens ist eine Ringnut vorgesehen, die zwischen der Ausnehmung für den Sperring und der Seilklemme angeordnet ist und in welcher ein Dichtring zur Abdichtung des Druckraums eingesetzt ist. Nachteilig bei diesem bekannten Gurtstraffer ist die relativ aufwendig ausgebildete Rücklaufsperre.

Aufgabe der Erfindung ist es, einen Gurtstraffer der eingangs genannten Art derart weiterzubilden, daß die Rücklaufsperre sowie das/die Zugseile auf einfache Weise sicher und raumsparend am Kolben angeordnet werden können.

Diese Aufgabe wird bei dem Gurtstraffer der eingangs genannten Art durch die kennzeichnenden Merkmale des Anspruches 1 gelöst.

Die Vorteile der Erfindung liegen insbesondere darin, daß eine besonders einfache Konstruktion in der Rücklaufsperre verwirklicht ist, bei der ein oder mehrere radial auswärts spreizende Spreizelemente am Kolben angeordnet sind. Am Zylinder ist dagegen mindestens ein Rastelement an der Innenwand angeordnet, und das Spreizelement hintergreift bei Erreichen einer Straffhalteposition - nachdem der Druck im Druckraum wieder abgebaut wird und die Zugkräfte des Zugseiles in Zugseilrichtung dominieren - das bzw. diejenigen Rastelemente, welche dann unmittelbar vor dem Spreizelement liegen. Dabei wird die erfindungsgemäße Ausführung besonders einfach, wenn als Rastelemente Ausnehmungen oder Löcher in der Zylinderwand ausgebildet werden, die bevorzugt in Längsrichtung des Zylinders beabstandet angeordnet sind. Das Spreizelement ist bei dieser Ausführungsform der Erfindung so ausgebildet, daß radial auswärts gerichtete Spreizkräfte wirken, wobei die Spreizelemente eine solche Formgebung aufweisen müssen, daß sie in Druckrichtung, also zum hinteren Ende des Zylinders hin über die Rastelemente des Zylinders hinweggleiten, jedoch in der Zugrichtung, also zu den Zugseilen hin durch die nach außen gerichteten Spreizkräfte in die Rastausnehmungen, beispielsweise in die Löcher der Zylinderwand einfallen und dort bleibend einrasten.

Besonders bevorzugt sind mehrere Rastelemente, beispielsweise Löcher in Längsrichtung des Zylinders beabstandet angeordnet, so daß die nach den Körpermaßen und der Sitzeinstellung des Benutzers der vom Gasdruck zum hinteren Ende des Zylinders eingetriebene Kolbenanordnung bis zu einer individuellen Straffhalteposition getrieben wird und dann im Bereich dieser Position Rastausnehmungen vorfindet, welche einen Rücklauf der Kolbenanordnung in Richtung auf das Zugseil bzw. den Gurt hin unmöglich machen.

Besonders bevorzugt ist der Zylinder an seinem hinteren Ende offen, und die hintere Endkante des Zylinders dient als Rastelement, welches vom Spreizelement bei Erreichen dieser Straffhalteposition hintergriffen wird.

Gemäß einer besonders bevorzugten Ausführungsform der Erfindung enthält das Spreizelement in Zylinder-Längsrichtung gerichtete Spreizfinger, an deren freiem hinteren Ende nach außen gerichtete Rastnasen angeformt sind, die mit auswärts gerichteten Spreizkräften belastet sind und aufgrund ihrer Formgabe bei einer Bewegung unter dem Gasdruck an den Rastausnehmungen vorbeigleiten, bei einer Richtungsumkehr jedoch in die nächstliegenden Rastausnehmungen bleibend einfallen, so daß der Rücklauf der Kolbenanordnung zuverlässig verhindert wird.

Gemäß einer weiteren Ausführungsform der Erfindung wird als Spreizelement ein Spreizring mit einer auswärts gerichteten Rastwulst vorgesehen, der entweder einstückig am hinteren Ende der Kolbenanordnung oder auf einem entsprechenden Zapfen beweglich angeordnet ist.

Bei einer zweckmäßigen Ausführungsform der Erfindung ist das Befestigungselement zum Befestigen des/der Zugseile als Seilklemme ausgebildet. Stellt das Befestigungselement beispielsweise einen Kolbenabschnitt mit einer axialen Bohrung dar, in welche das Zugseilende eingeführt ist, wird das Zugseil durch umfangseitige Pressung dieses Kolbenabschnitts kraftschlüssig in der Bohrung gehalten. Die Zugseillänge läßt sich vorteilhafterweise reduzieren, wenn das Befestigungselement ein zum Druckraum offenes Sackloch im Kolben enthält, in welchem das Zugseil eingeklemmt ist. Gleichfalls ist mittels einer solchen Konstruktion ausgeschlossen, daß in einer Aulösesituation Treibmittel am Zugseil vorbei in den Raum hinter den Kolben gelangen kann.

Bei einer bevorzugten Ausführungsform ist ein Gasgenerator-Gehäuse in dem Druckraum zwischen dem Kolben und der vorderen Zylinderstirnwand vorgesehen, welches zur Aufnahme des Gasgenerators dient. Auf diese Weise läßt sich ein kompakter Aufbau des Gurtstraffers realisieren, da kein zusätzlicher Raum neben dem Zylinder für den Gasgenerator in Anspruch genommen wird.

Vorzugsweise weist das Gasgenerator-Gehäuse einen Hohlraum zur Aufnahme des Gasgenerators auf, welcher über einen Treibmittelkanal mit dem Druckraum verbunden ist. Ebenso sind eine oder zwei Durchgangsbohrungen zum Durchführen des/der Zugseile vorhanden, welche auf diese Weise definiert an dem Gasgenerator vorbeigeführt werden.

Die vordere Zylinderstirnwand ist vorzugsweise entweder von dem Gasgenerator-Gehäuse - und hierbei bevorzugt von dessen vorderer Stirnwand - oder einer separaten Trennwand gebildet.

Um von außen ein Zündkabel zum Gasgenerator zu führen, weist die vordere Zylinderstirnwand bevorzugt mindestens eine Bohrung auf, deren Durchmesser annähernd dem Durchmesser des Zündkabels entspricht, um ein Entweichen des Treibmittels durch diese Bohrung weitgehend zu verhindern.

Einer raumeffizienten Anbringung des Gurtstraffers, beispielsweise in der Nähe eines Fahrzeugsitzes, kommt es zugute, wenn eine Seilumlenkung zwischen der vorderen Zylinderstirnwand und dem Gurtanlenkglied vorgesehen ist. Hierdurch kann der Zylinder z.B. parallel zum Fahrzeugboden neben dem Fahrzeugsitz angeordnet werden, während sich das Gurtanlenkglied - beispielsweise ein Gurtschloß - aufwärts ragend und leicht zugänglich in Hüfthöhe des Fahrzeuginsassen befindet.

Vorteilhafterweise ist die Seilumlenkung an einem Teil des Fahrzeugs, beispielsweise am Fahrzeugsitz, befestigbar. Ein einfacher Aufbau des Gurtstraffers ergibt sich weiterhin dadurch, wenn bei dieser Ausführungsform der Zylinder an der Seilumlenkung befestigt ist.

Vorteilhafte Weiterbildungen der Erfindung sind durch die Merkmale der Unteransprüche gekennzeichnet.

Im folgenden wird ein Ausführungsbeispiel der Erfindung anhand der Zeichnungen näher erläutert. Es zeigen:
- Fig. 1: eine Seitenansicht eines Gurtstraffers, teilweise im Schnitt; und
- Fig. 2: eine vergrößerte Seitenansicht des Kolbens und des Zugseils des Gurtstraffers gemäß der Fig. 1;

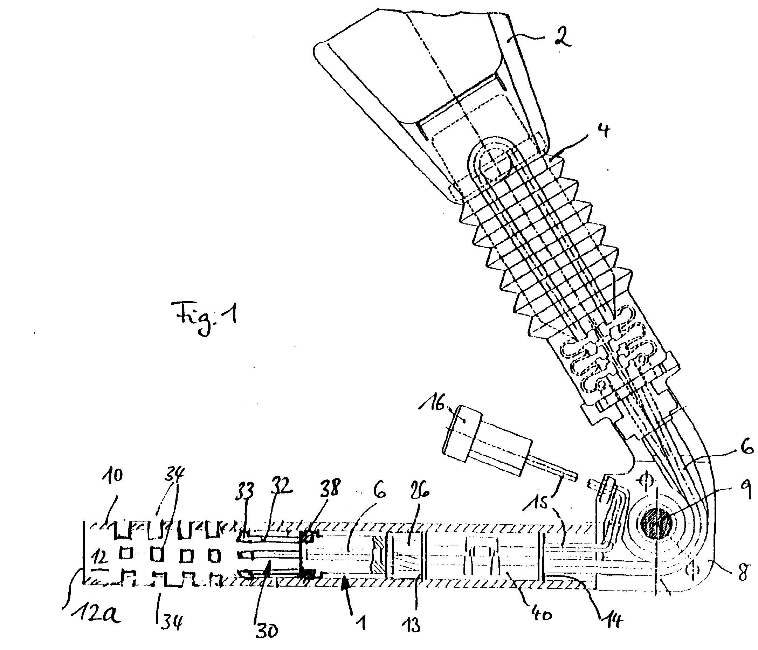

In Fig. 1 ist ein Gurtstraffer mit einem als Gurtschloß ausgebildeten Gurtanlenkglied 2 und einem linearen Zylinder 10 sowie einem in dem Zylinder 10 verschiebbar angeordneten Kolben 1 dargestellt. Der Kolben 1 ist mit dem Gurtanlenkglied 2 über ein dehnfestes Zugseil 6 verbunden, dessen eines Ende hierzu schlaufenförmig an dem Gurtanlenkglied 2 befestigt ist. Im weiteren Verlauf ist das Zugseil 6 durch eine Durchgangsöffnung einer Seilumlenkung 8 und anschließend durch die vordere Zylinderstirnwand 14 des Zylinders 10, welcher an der Seilumlenkung 8 befestigt ist, zum Kolben 1 geführt. Auf der Strecke zwischen dem Gurtanlenkglied 2 und der Seilumlenkung 8 ist das Zugseil 6 von einem Faltenbalg 4 ummantelt.

Zwischen der vorderen Zylinderstirnwand 14 und dem Kolben 1 ist ein Druckraum 26 vorgesehen, in welchem ein zylinderförmiges Gasgenerator-Gehäuse 40 zur Aufnahme eines Gasgenerators (nicht dargestellt) angeordnet ist. In dem gezeigten Ausführungsbeispiel bildet die der Seilumlenkung 8 zugewandte Stirnseite des Gasgenerator-Gehäuses 40 die vordere Zylinderstirnwand 14, durch welche das Zugseil 6 hindurchgeführt ist. Auf der dem Kolben 1 zugewandten Stirnseite 13 des Gasgenerator-Gehäuses 40 ist ebenfalls eine Bohrung vorgesehen, um das Zugseil 6 zum Kolben 1 zu führen.

Weiterhin weist das Gasgenerator-Gehäuse 40 einen Hohlraum zur Aufnahme des Gasgenerators auf, welcher über einen Treibmittelkanal (nicht dargestellt) mit dem Druckraum 26 vor dem Kolben 1 verbunden ist. Der Treibmittelkanal verläuft hierbei durch die hintere Stirnwand 13 des Gasgenerator-Gehäuses 40. Der Gasgenerator seinerseits ist weiterhin über ein Zündkabel 15, welches durch die vordere Zylinderstirnwand 14 und anschließend durch eine Durchgangsöffnung in der Seilumlenkung 8 zu einem außen liegenden Stecker 16 geführt ist, mit einem Sensor (nicht dargestellt) verbunden. Wenn der Sensor auf einen Aufprall des Fahrzeugs anspricht, wird der Zünder des Gasgenerators gezündet und der Gasgenerator gibt dann sein Treibmittel explosionsartig über den Treibmittelkanal in den Druckraum 26 ab und der Kolben 1 wird ruckartig zum hinteren Ende 12 des Zylinders 10 verschoben.

In einer alternativen, nicht dargestellten Ausführungsform der Erfindung ist eine separate Trennwand zwischen dem Gasgenerator-Gehäuse 40 und der Seilumlenkung 8 vorgesehen, welche die vordere Zylinderstirnwand 14 bildet.

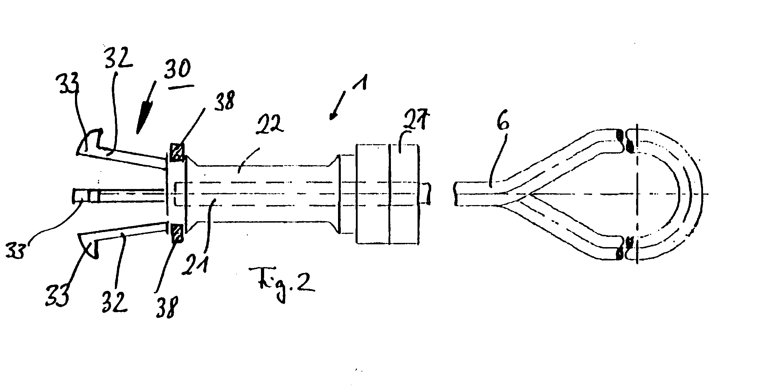

In Fig. 2 ist der Kolben 1 und das Zugseil 6 in Vergrößerung dargestellt. Der einstückig ausgebildete Kolben 1 weist in Längsrichtung im wesentlichen drei aneinander anschließendene Abschnitte auf. Auf seiner der vorderen Zylinderstirnwand 14 zugewandten Seite (bezogen auf Fig. 2 rechts) enthält der Kolben 1 einen becherförmigen, zur vorderen Zylinderstirnseite 14 offenen Vorderabschnitt 27, dessen Außendurchmesser geringfügig kleiner ist als der Innendurchmesser des Zylinders 10. Durch den Hohlraum des Vorderabschnitts 27, der einen Großteil des Druckraums 26 bildet, ist das kolbenseitige Ende des Zugseils 6 zu einem Sackloch 21 geführt, welches in einem mittleren Abschnitt des Kolbens 1 endet. Dieser mittlere Kolbenabschnitt stellt ein im wesentlichen zylinderförmiges Befestigungselement 22 für das Zugseil 6 dar, welches auch eine ringförmige Dichtung 38 am Außenumfang trägt, die an der Innenwand des Zylinders 10 anliegt. Zum Befestigen des Zugseils 6 wird das Zugseil 6 in das Sackloch 21 eingeführt und der Kolben 1 im Bereich des Befestigungselementes 22 umfangseitig zusammengepreßt, um das Zugseil 6 in dem Sackloch 21 kraftschlüssig zu halten. Das Befestigungselement 22 wirkt demnach als Seilklemme für das Zugseil 6. Das Material des Kolbens 1 - beispielsweise ein hartes, aber dennoch plastisch verformbares Metall - ist entsprechend gewählt.

Der Zylinder 10 besteht aus einem beidseitig offenen Rohr, welches mit dem vorderen Ende an einer Seilumlenkung 8 befestigt ist, und dessen hinterer Endabschnitt als Auslauf für die Kolbenanordnung dient. Im vorderen Bereich des Zylinders 10 ist ein Gehäuse 40 zur Aufnahme eines Gasgenerators (nicht dargestellt) eingesetzt, durch dessen vordere Stirnwand 14 die beiden Zugseile 6 mit geringem Spiel hindurchlaufen, das Gasgeneratorgehäuse 40 durchlaufen und dann an dem Befestigungselement 22 der Kolbenanordnung 1 mittels einer Seilklemme befestigt sind. Das Befestigungselement 22 ist an seinem hinteren Ende 3 zylindrisch ausgebildet und trägt dort eine ringförmige Dichtung 38, die gegen die Innenwand des Zylinders 10 anliegt. Zwischen dem Gasgeneratorgehäuse 40 und der ringförmigen Dichtung 38 befindet sich der Druckraum 26, in den - bei Zündung des Gasgenerators - das Treibgas einströmt, wodurch die Kolbenanordnung 1 zum hinteren Ende des Zylindrs 10 getrieben wird.

Hinter dem Befestigungselement 22 trägt die Kolbenanordnung - in der dargestellten Ausführungsform - mehrere Spreizarme 32, die sich zum hinteren Ende 12 des Zylinders 10 erstrecken und an ihrem freien hinteren Ende nach außen gerichtete Rastnasen 33 tragen. In Fig. 2 sind vier Spreizarme dargestellt, die zu ihrem freien Ende hin radial nach außen ausgestellt sind und - beim Einsetzen der Kolbenanordnung 1 in den Zylinder 10 - unter radialem Spreizdruck gegen die Innenwand des Zylinders 10 anliegen. Die Rastnasen 33 besitzen eine Formgebung, die es mit sich bringt, daß die Rastnasen bei einer Bewegung der Kolbenanordnung 1 zum hinteren Ende 12 des Zylinders an entsprechenden Rastausnehmungen 34 vorbeigleiten, daß jedoch bei einer Zugbeaufschlagung - zur Seilumlenkung 8 hin - die Spreizfinger mit ihren Rastnasen in entsprechende Rastausnehmungen 34 eingreifen und dort auch bei großen Zugkräften eingerastet bleiben.

Der Zylinder 10 ist bevorzugt als Metallrohr ausgebildet, er kann alternativ auch aus Kunststoff oder auch metallverstärktem Kunststoff bestehen. In vorgegebenem Abstand voneinander weist die Zylinderwand Rastelemente 34 auf, die als Durchbrüche oder Löcher ausgebildet sind und in Umfangsrichtung den Positionen der Spreizfinger 32 entspricht. Der Zylinder 10 ist an seinem hinteren Ende 12 offen. Die Spreizfinger 32 legen sich mit ihren Rastnasen 33 hinter die hintere Umfangskante 12a des Zylinders, wenn die Kolbenanordnung 1 unter der Wirkung des in den Druckraum 26 einströmenden Treibgases eine maximale Auslenkung erfährt und die Spreizfinger aus dem Zylinderrohr austreten.

## Patentansprüche

1. Gurtstraffer für ein Fahrzeuginsassen-Rückhaltesystem, mit einem Zylinder (10), einem in dem Zylinder (10) verschiebbaren Kolben (1), mindestens einem Zugseil (6), welches von dem Kolben (1) mit geringem Spiel durch eine vordere Zylinderstirnwand (14) zu einem Gurtanlenkglied (2) verläuft, einem Gasgenerator, bei dessen Zündung ein Treibmittel in einen Druckraum (26) zwischen dem Kolben (1) und der vorderen Zy!inderstirnwand (14) einströmt und den Kolben (1) von einer Normalposition in eine Straffhalteposition verschiebt, und einer Rücklaufsperre (30, 34), welche den Kolben (1) in der Straffhalteposition hält,
dadurch gekennzeichnet, daß die Rücklaufsperre (30,34) am Kolben (1) mindestens ein radial auswärts spreizendes Spreizelement (30) und am Zylinder (10) mindestens ein Rastelement (34) aufweist, und daß das Spreizelement (30) das/die Rastelemente (34) bei Erreichen der Straffhalteposition fest hintergreift.

2. Gurtstraffer nach Anspruch 1,
dadurch gekennzeichnet, daß das Spreizelement (30) mit einer radial auswärts gerichteten Spreizkraft beaufschlagt ist.

3. Gurtstraffer nach Anspruch 1 oder 2,
dadurch gekennzeichnet, daß die Rastelemente (34) als Ausnehmungen in der Zylinderwand ausgebildet sind.

4. Gurtstraffer nach Anspruch 3,
dadurch gekennzeichnet, daß die Rastelemente (34) als Löcher in der Zylinderwand ausgebildet sind.

5. Gurtstraffer nach einem der vorstehenden Ansprüche,
dadurch gekennzeichnet, daß mehrere Rastelemente (34) in Längsrichtung des Zylinders (10) beabstandet angeordnet sind.

6. Gurtstraffer nach Anspruch 1,
dadurch gekennzeichnet, daß der Zylinder (10) an seinem hinteren Ende offen ist, und daß die hintere Endkante (12) des Zylinders (10) als Rastelement dient, welches vom Spreizelement bei Erreichen dieser Straffhalteposition hintergriffen wird.

7. Gurtstraffer nach einem der vorstehenden Ansprüche,
dadurch gekennzeichnet, daß das Spreizelement (30) in Zylinder-Längsrichtung gerichtete Spreizfinger (32) aufweisen, an deren freiem hinteren Ende nach außen gerichtete Rastnasen (33) angeformt sind.

8. Gurtstraffer nach einem der vorstehenden Ansprüche,
dadurch gekennzeichnet, daß das Spreizelement (30) als Spreizring mit einer auswärts gerichteten Rastwulst ausgebildet ist.

9. Gurtstraffer nach Anspruch 8,
dadurch gekennzeichnet, daß der Kolben (1) einen Zapfen (24) enthält, der in Richtung auf das hintere Ende des Zylinders (10) absteht und den Spreizring trägt.

10. Gurtstraffer nach Anspruch 9,
dadurch gekennzeichnet, daß der Zapfen einstückig und zentrisch an einem Befestigungselement (22) für das/die Zugseile (6) angeformt ist.

11. Gurtstraffer nach einem der vorstehenden Ansprüche,
dadurch gekennzeichnet, daß das Befestigungselement (22) zum Befestigen des/der Zugseile (6) als Seilklemme ausgebildet ist.

12. Gurtstraffer nach Anspruch 11,
dadurch gekennzeichnet, daß das Befestigungselement (22) ein zum Druckraum (26) offenes Sackloch (21) umfaßt, in welchem das kolbenseitige freie Ende des/der Zugseile (6) eingeklemmt ist.

13. Gurtstraffer nach einem der vorstehenden Ansprüche,
gekennzeichnet durch ein Gasgenerator-Gehäuse (40) in dem Druckraum (26) zur Aufnahme des Gasgenerators.

14. Gurtstraffer nach Anspruch 14,
dadurch gekennzeichnet, daß das Gasgenerator-Gehäuse (40) einen Hohlraum zur Aufnahme des Gasgenerators, einen Treibmittelkanal von dem Hohlraum zu dem Druckraum (26) sowie eine oder zwei Durchgangsbohrungen zum Durchführen des/der Zugseile (6) aufweist.

15. Gurtstraffer nach einem der vorstehenden Ansprüche,
dadurch gekennzeichnet, daß das Gasgenerator-Gehäuse (40) oder eine separate Trennwand die vordere Zylinderstirnwand (14) bildet.

16. Gurtstraffer nach einem der vorstehenden Ansprüche,
dadurch gekennzeichnet, daß die vordere Zylinderstirnwand (14) Bohrungen zum Hindurchführen eines Zündkabels (15) zu dem Gasgenerator aufweist.

17. Gurtstraffer nach einem der vorstehenden Ansprüche,
gekennzeichnet durch eine Seilumlenkung (8) zwischen der vorderen Zylinderstirnwand (14) und dem Gurtanlenkglied (2).

18. Gurtstraffer nach Anspruch 17,
dadurch gekennzeichnet, daß der Zylinder (10) an der Seilumlenkung (8) und die Seilumlenkung (8) an einem Teil eines Fahrzeuges befestigbar ist.

19. Gurtstraffer nach einem der vorstehenden Ansprüche,
dadurch gekennzeichnet, daß der Zylinder (10) aus Kunststoffmaterial besteht.

20. Gurtstraffer nach Anspruch 19,
dadurch gekennzeichnet, daß der Zylinder (10) eine Metallverstärkung besitzt.

21. Gurtstraffer nach einem der vorstehenden Ansprüche,
dadurch gekennzeichnet, daß der Zylinder (10) als Metallrohr ausgebildet ist.
